# EUROPÄISCHE PATENTANMELDUNG

(11) **EP 1 236 695 A2**
(43) Veröffentlichungstag der Anmeldung: **04.09.2002**
(21) Anmeldenummer: 02001405.6
(22) Anmeldetag: 21.01.2002
(51) Int. Cl.: C03C 10/14

(54) **Glaskeramik**

(30) Priorität: 02.03.2001 DE 10110225
(71) Anmelder: Schott Glas, 55122 Mainz (DE); CARL-ZEISS-STIFTUNG trading as SCHOTT GLAS, 55122 Mainz (DE)
(72) Erfinder: Siebers, Friedrich, Dr., 55283 Nierstein (DE); Beudt, Hans-Werner, 65187 Wiesbaden (DE); Sprenger, Dirk, Dr., 55271 Stadecken-Elsheim (DE)

(57) **Zusammenfassung**

Die Erfindung betrifft ein Glas und eine Glaskeramik mit Hochquarz- und/oder Keatit-Mischkristallen und ein Verfahren zur deren Herstellung, sowie deren Verwendung als Trägermaterial für die Beschichtung. Glaskeramik mit Hochquarzund/oder Keatit-Mischkristallen mit einer Oberflächenrauhigkeit ohne Polieren von Ra < 50 nm, einer thermischen Ausdehnung im Temperaturbereich zwischen 20 °C und 300 °C von <1,2 · 10⁻⁶/K, einer Transmission im nahen Infrarot bei 1050 nm von > 85% bei 4 mm Dicke, und einer Zusammensetzung in Gew.-%, bezogen auf die Gesamtzusammensetzung, enthaltend:

| | |
|---|---|
| Li₂O | 3,0-5,5 |
| Na₂O | 0-2,5 |
| K₂O | 0-2,0 |
| Σ Na₂O+K₂O | 0,5-3,0 |
| Σ MgO+ZnO | < 0,3 |
| SrO | 0-2,0 |
| BaO | 0-3,5 |
| B₂O₃ | 0-4,0 |
| Al₂O₃ | 19,0-27,0 |
| SiO₂ | 55,0-66,0 |
| TiO₂ | 1,0-5,5 |
| ZrO₂ | 0-2,5 |
| Σ TiO₂+ZrO₂ | 3,0-6,0 |
| P₂O₅ | 0-8,0 |
| Fe₂O₃ | < 200 ppm |
| F | 0-0,6 als Ersatz für O |

sowie gegebenenfalls mindestens ein Läutermittel, wie As₂O₃, Sb₂O₃, SnO₂, CeO₂, Sulfat- und Chlorid-Verbindungen.

## Beschreibung

Die Erfindung betrifft ein Glas und eine Glaskeramik mit Hochquarz- und/oder Keatit-Mischkristallen und ein Verfahren zur deren Herstellung, sowie deren Verwendung als Trägermaterial für die Beschichtung.

Es ist bekannt, dass sich Gläser aus dem System Li₂O-Al₂O₃-SiO₂ in Glaskeramiken mit Hochquarz-Mischkristallen und/oder Keatit-Mischkristallen als Hauptkristallphasen umwandeln lassen. Die Herstellung dieser Glaskeramiken erfolgt in mehreren Stufen. Nach der Schmelze und Heißformgebung wird das Material üblicherweise bei Temperaturen in der Gegend der Transformationstemperatur (Tg) gekühlt, um thermische Spannung zu entfernen. Das Material wird weiter auf Raumtemperatur abgekühlt. Der Glaskörper wird hinsichtlich seiner spezifizierten Qualitätsmerkmale untersucht.

Mit einer zweiten gesteuerten Temperaturbehandlung wird das Ausgangsglas kristallisiert und in einen glaskeramischen Artikel überführt. Diese Keramisierung erfolgt in einem mehrstufigen Temperaturprozess, bei dem zunächst durch Keimbildung bei Temperaturen von 600 °C bis 800 °C Keime aus TiO₂oder ZrO₂/TiO₂-Mischkristallen erzeugt werden. Auch SnO₂ kann an der Keimbildung beteiligt sein. Bei der anschließenden Temperaturerhöhung wachsen bei der Kristallisationstemperatur von 700 °C bis 900 °C Hochquarz-Mischkristalle auf diesen Keimen auf. Bei weiterer Temperaturerhöhung im Bereich von 800 °C bis 1100 °C wandeln sich diese Hochquarz-Mischkristalle weiter in Keatit-Mischkristalle um. Der Stabilitätsbereich der Hochquarz-Mischkristall enthaltenden Glaskeramik ist je nach Zusammensetzung ausgedehnt. Bei einigen Zusammensetzungen liegt die Umwandlungstemperatur in die Keatit-Mischkristallphase bis zu 150 °C oberhalb der Kristallisationstemperatur der Hochquarz-Mischkristall-Glaskeramik. Bei anderen Zusammensetzungen wandeln sich die Hochquarz-Mischkristalle fast übergangslos in Keatit-Mischkristalle um. Glaskeramiken mit Hochquarz-Mischkristallen sind transparent darstellbar. Die Umwandlung in Keatit-Mischkristall ist mit einem Kristallwachstum, daher mit zunehmender Kristallitgröße, verbunden. Hierdurch erfolgt zunehmend Lichtstreuung. Die Lichttransmission wird zunehmend verringert. Der glaskeramische Artikel erscheint dadurch zunehmend transluzent und schließlich opak. Die hohe Lichttransmission der Gläser und Glaskeramiken ermöglicht eine effektive Qualitätsbeurteilung. Formkörper mit Defekten, die sicherheitsrelevant sind oder die spezifizierten Produkteigenschaften gefährden, können vor weiteren Prozessschritten aussortiert werden.

Eine Schlüsseleigenschaft dieser Glaskeramiken ist Herstellbarkeit von Werkstoffen, die über einen äußerst niedrigen Wärmeausdehnungskoeffizienten im Bereich von 20 °C bis 300 °C und darüber von < 1,5 · 10⁻⁶/K verfügen. Mit Glaskeramiken, die Hochquarz-Mischkristalle als Hauptkristallphase enthalten, werden in diesem Temperaturbereich sogar Werkstoffe mit nahezu Nullausdehnung erhalten. Für die Verwendung als Trägermaterial für astronomische Spiegel werden Glaskeramiken so modifiziert, dass ihre thermische Nullausdehnung in dem für diese Anwendung wichtigen Temperaturbereich von - 50 °C bis + 50 °C liegt. Ein solches Glaskeramikmaterial wird unter der Bezeichnung ZERODUR bei SCHOTT GLAS produziert.

Neuerdings werden diese Glaskeramiken auch in der Lichttechnik als Material für Reflektoren bei Anwendungen eingesetzt, bei denen es aufgrund der Miniaturisierung und hohen Lichtleistungen zu hohen thermischen Belastungen kommt. Gegenüber den verbreiteten Reflektoren aus Borosilikat- oder Aluminosilikatglas genügen diese Glaskeramiken höchsten Anforderungen hinsichtlich der Temperaturbelastbarkeit und Temperaturgradientenfestigkeit. In den Reflektoren werden Lichtquellen eingesetzt, die es gestatten, in einem kleinen Volumen hohe Lichtstärke zu erzeugen. Die Lichtquellen basieren auf dem technischen Prinzip von leistungsstarken Halogenlampen, Lichtbogen- oder Gasentladungslampen. Das Strahlungsmaximum dieser Höchstleistungslampen liegt bei Wellenlängen von 1 µm, daher im nahen Infrarot.

Diese Glaskeramiken können mit metallischen Schichten, wie Aluminium oder mit alternierenden Schichtsystemen aus oxidischen Substanzen beschichtet werden. Die oxidischen Mehrfachschichten arbeiten nach dem Interferenzprinzip und erlauben es, das sichtbare Licht zu reflektieren und die auftreffende Infrarotstrahlung nach hinten durchzulassen. Dabei soll das Trägermaterial eine hohe IR-Transmission besitzen, damit es die IR-Strahlung nach hinten durchlässt und sich dabei nicht unzulässig erwärmt. Reflektoren dieses Typs werden als Kaltlichtreflektoren bezeichnet. Digitale Projektionsgeräte und DVD- oder Videorecorder-Projektionsgeräte sind zunehmend mit Glaskeramik-Kaltlichtreflektoren ausgestattet.

Glaskeramiken, die als Spiegelträger in der Astronomie verwendet werden, sind in DE-A-1902432 und US-A-4285728 beschrieben. Die Formgebung wird durch Gießen der Glasschmelze in eine feuerfeste Form erzeugt. Vor der Verspiegelung werden die nach der Kristallisation erhaltenen Glaskeramiken mit Hochquarz-Mischkristall als vorherrschende Kristallphase zunächst geschliffen und dann poliert. Dieses Verfahren führt zur gewünschten geometrischen Kontur und niedrigen Oberflächenrauhigkeit. Es ist jedoch zeit- und kostenintensiv.

In JP-B-95037324 werden Glaskeramiken aus Hochquarz- oder Keatit-Mischkristallen für die Verwendung als reflektierende Spiegelträgermaterialien beschrieben, die nach dem Keramisieren auch ohne Politur über eine niedrige Oberflächenrauhigkeit Ra von höchstens 0,03 µm verfügen, und eine Zusammensetzung in Gew.-% mit 50-65 SiO₂, 18-30 Al₂O₃, 3-8 Li₂O, 3-5 TiO₂+ZrO₂, 0,3-7 RO (R = Mg, Ca, Zn, Pb or V) und bis zu 3 R₂O (R = K, Na) aufweisen.

In US-A-4438210 werden transparente Glaskeramiken mit Hochquarz-Mischkristall als vorherrschender Kristallphase beschrieben, die trotz vergleichsweise hoher Fe₂O₃-Gehalte von bis zu 1000 ppm im wesentlichen farblos sind. Die Zusammensetzung der Glaskeramiken weist in Gew.-% aus 65-75 SiO₂, 1-4 Li₂O, 15-25 Al₂O₃, 0,5-2 ZnO, 0-2 Na₂O und/oder K₂O, 2-6 TiO₂, 0-2 ZrO₂, 0-2,5 BaO, 0-1,2 F und 100-1000 ppm Fe₂O₃ auf.

Aufgabe der Erfindung ist, ein Glas und eine Glaskeramik mit Hochquarzund/oder Keatit-Mischkristallen, die sich für die Beschichtung mit einer Spiegelschicht eignen und ein wirtschaftliches und umweltschonendes Verfahren zur Herstellung der Glas und Glaskeramik bereitzustellen.

Die Aufgabe wird durch eine Glaskeramik gelöst, mit einer Zusammensetzung in Gew.-%, bezogen auf die Gesamtzusammensetzung, von:

| | |
|---|---|
| Li₂O | 3,0-5,5 |
| Na₂O | 0-2,5 |
| K₂O | 0-2,0 |
| Σ Na₂O+K₂O | 0,5-3,0 |
| Σ MgO+ZnO | < 0,3 |
| SrO | 0-2,0 |
| BaO | 0-3,5 |
| B₂O₃ | 0-4,0 |
| Al₂O₃ | 19,0-27,0 |
| SiO₂ | 55,0-66,0 |
| TiO₂ | 1,0-5,5 |
| ZrO₂ | 0-2,5 |
| Σ TiO₂+ZrO₂ | 3,0-6,0 |
| P₂O₅ | 0-8,0 |
| Fe₂O₃ | < 200 ppm |
| F | 0-0,6 als Ersatz für O |

sowie gegebenenfalls mindestens ein Läutermittel, wie As₂O₃, Sb₂O₃, SnO₂, CeO₂, Sulfat- und Chlorid-Verbindungen enthält.

Die erfindungsgemäße Glaskeramik weist
- eine für die Formgebung durch Pressen vorteilhafte, niedrige Viskosität mit einer Verarbeitungstemperatur V_{A} < 1300 °C
- eine gute Entglasungsstabilität mit einer oberen Entglasungstemperatur höchstens 50 °C oberhalb der Verarbeitungstemperatur V_{A}
- eine Oberflächenrauhigkeit des Glases und der Glaskeramik ohne Polieren von Ra < 50 nm, bevorzugt < 20 nm
- eine thermische Ausdehnung der Glaskeramik im Temperaturbereich zwischen Raumtemperatur und 300 °C von < 1,2 10⁻⁶/K
- eine hohe Transmission des Glases und der Glaskeramik im nahen Infraroten bei 1050 nm von > 85% bei 4 mm Dicke auf.

Für die Formgebung durch Pressen oder Blasen soll das Glas über eine niedrige Verarbeitungstemperatur V_{A} < 1300 °C verfügen. Die Temperaturbelastungen im Bereich des Speisers, des Auslaufs und für die Presswerkzeuge sind dadurch verringert, wodurch sich die Standzeiten erhöhen. Auch das Einschmelzen des Glases in der Schmelzwanne und die Blasenqualität des erhaltenen Glases werden durch die niedrige Viskosität günstig beeinflusst.

Um unerwünschte Entglasung der Glasschmelze bei der Formgebung und Herstellung des Tropfens im Speiser zu vermeiden, soll die obere Entglasungstemperatur der Glasschmelze höchstens 50 °C oberhalb der Verarbeitungstemperatur (V_{A}) liegen. Die obere Entglasungstemperatur der Glasschmelze ist die höchste Temperatur, bei der die ersten Kristalle im Kontakt mit den Formgebungsmaterialien auftreten. Bei diesem Temperaturabstand lässt sich eine kritische Kristallbildung am Auslaufring oder im Speiser erfahrungsgemäß noch vermeiden, da die Glastemperatur bei der Konditionierung des Tropfens deutlich oberhalb V_{A} liegt. Günstiger ist es, wenn die obere Entglasungstemperatur unterhalb von V_{A} liegt.

Die bei dem Pressen erhaltene niedrige Oberflächenrauhigkeit des glasigen Formkörpers darf sich bei der Kristallisation nicht unzulässig verschlechtern. Insbesondere bei Ausbildung großer mittlerer Kristallitgrößen kann sich die Oberflächenrauhigkeit der Glaskeramik erhöhen. Nach Aufbringen der Spiegelschicht bleibt die Oberflächenrauhigkeit weitgehend erhalten und bewirkt eine teilweise Streuung des Lichtes. Durch diese Lichtstreuung wird die Lichtausbeute verschlechtert. Als Zielgröße für die Oberflächenrauhigkeit wird ein Ra-Wert der Glaskeramik von < 50 nm, bevorzugt < 20 nm gefordert. Mit diesem Wert werden Lichtausbeuten erreicht, die ein kostspieliges Polieren des Trägermaterials vor der Beschichtung in der Regel überflüssig machen.

Für Anwendungen, bei denen höchste Forderungen an die thermische Belastbarkeit des Spiegelträgermaterials gestellt werden, soll die thermische Ausdehnung der Glaskeramik im Temperaturbereich zwischen Raumtemperatur und 300 °C weniger als 1,2 · 10⁻⁶/K betragen. Dies bewirkt eine hohe Temperaturgradientenfestigkeit, da die Temperaturunterschiede in dem Spiegelträgermaterial keine kritischen, thermisch bedingten Spannungen aufbauen können. Vor allem die nicht völlig zu vermeidenden Defekte in der Glaskeramik oder Mikrorisse zwischen Spiegelschicht und Trägermaterial können so aufgrund der durch Temperaturunterschiede bedingten Spannungen beim Einund Ausschalten oder im Gebrauch nicht zum Wachstum angeregt werden.

Insbesondere für die Verwendung als Kaltlichtreflektor, bei Anwendungen mit höchster Strahlungsleistung, muss das Material über hohe Transmission im nahen Infraroten verfügen, damit es die IR-Strahlung nach hinten durchlässt und sich dabei nicht unzulässig erwärmt. Mit der erfindungsgemäßen Zusammensetzung wird eine IR-Transmission von > 85% bei 1050 nm und 4 mm Dicke erreicht. Bei dieser Wellenlänge liegt das Strahlungsmaximum der meisten lichtstarken Lichtquellen. Unglücklicherweise liegt bei dieser Wellenlänge in Gläsern und Glaskeramiken des Li₂O-Al₂O₃-SiO₂-Typs auch eine Absorptionsbande, die dem zweiwertigen Eisen Fe²⁺ zugeschrieben wird. Um die Absorption in diesem kritischen Bereich zu vermindern, hat man daher die Wahl sehr saubere, daher eisenarme Gemengerohstoffe auszuwählen. Auch die Aufbereitung der Scherben und der gesamte Prozess muss die Kontamination durch Eisen gering halten. Beides führt zu erhöhtem Aufwand und ist daher wirtschaftlich nachteilig. Eine oxidische Schmelzführung durch Verwendung von Nitraten als Gemengerohstoffe, ist nur im geringen Maße befähigt, das schädliche Fe²⁺ zu Fe³⁺ aufzuoxidieren. Mit der erfindungsgemäßen Zusammensetzung wird eine gute IR-Transmission von > 85% bei 1050 nm bei wirtschaftlich vertretbaren Fe₂O₃-Gehalten von bis zu 200 ppm erreicht.

Die erfindungsgemäße Zusammensetzung der Glaskeramik mit Hochquarzund/oder Keatit-Mischkristallen enthält in Gew.-% bezogen auf die Grundzusammensetzung:

| | |
|---|---|
| Li₂O | 3,0-5,5 |
| Na₂O | 0-2,5 |
| K₂O | 0-2,0 |
| Σ Na₂O+K₂O | 0,5-3,0 |
| MgO+ZnO | < 0,3 |
| SrO | 0-2,0 |
| BaO | 0-3,5 |
| B₂O₃ | 0-4,0 |
| Al₂O₃ | 19,0-27,0 |
| SiO₂ | 55,0-66,0 |
| TiO₂ | 1,0-5,5 |
| ZrO₂ | 0-2,5 |
| Σ TiO₂+ZrO₂ | 3,0-6,0 |
| P₂O₅ | 0-8,0 |
| Fe₂O₃ | < 200 ppm |
| F | 0-0,6 als Ersatz für O |

sowie gegebenenfalls mindestens ein Läutermittel wie As₂O₃, Sb₂O₃, SnO₂, CeO₂, Sulfat- und Chlorid-Verbindungen.

Die Oxide Li₂O, Al₂O₃ und SiO₂ sind notwendige Bestandteile von Glaskeramiken mit Hochquarz- und/oder Keatit-Mischkristallphasen. Als weitere Komponenten können MgO, ZnO und P₂O₅ in die Kristallphasen eingebaut werden. Li₂O-Gehalte von über 5,5 Gew.-% erhöhen die Kristallwachstumsgeschwindigkeit und gefährden die Entglasungsstabilität. Der MgO-Gehalt ist wegen der verstärkten Einfärbung im Zusammenspiel mit Fe₂O₃-Spurenkonzentrationen, begrenzt. Auch das kristallchemisch dem Mg verwandte Zn ist deswegen begrenzt. Die Summe vom MgO und ZnO soll weniger als 0,3 Gew.-% betragen. Der P₂O₅-Gehalt ist auf maximal 8 Gew.-% begrenzt. Höhere Gehalte führen zu einer deutlich verschlechterten chemischen Beständigkeit der Glaskeramik. Dies ist nachteilig, weil die glaskeramischen Trägermaterialien vor der Beschichtung mit der Spiegelschicht üblicherweise chemisch gereinigt werden, um oberflächliche Kontaminationen, insbesondere organischer Art, zu entfernen. Bei schlechter chemischer Beständigkeit der Glaskeramik kann die Oberfläche der Glaskeramik angegriffen werden, wodurch die Oberflächenrauhigkeit verschlechtert und die Lichtausbeute verringert wird. Der Al₂O₃-Gehalt soll 19-27 Gew.-% betragen. Der Al₂O₃-Gehalt beträgt weniger als 27 Gew.-%, um hohe Viskositäten der Glasschmelze und die unerwünschte Entglasung der Glasschmelze zu Mullit zu vermeiden. Der SiO₂-Gehalt ist auf maximal 66 Gew.-% begrenzt, da diese Komponente die Viskosität des Glases erhöht und die, für die Formgebung über Pressen vorteilhafteren niedrigeren Verarbeitungstemperaturen V_{A} der Glasschmelze beeinträchtigt. Durch die Zugabe der Alkalioxide Na₂O, K₂O und der Erdalkalioxide SrO, BaO wird die Schmelzbarkeit und das Entglasungsverhalten des Glases bei der Herstellung verbessert. Um die gewünschten niedrigen Verarbeitungstemperaturen V_{A} < 1300 °C zu erreichen, soll die Summe Na₂O+K₂O mindestens 0,5 Gew.-% betragen. Der Einsatz von Na₂O und K₂O ist notwendig, um in der Glaskeramik eine für die niedrige Oberflächenrauhigkeit vorteilhafte glasige Oberflächenschicht zu erzeugen. Höhere Gehalte von Na₂O, K₂O, SrO, BaO und B₂O₃ als die angegeben Grenzgehalte, verschlechtern die thermische Ausdehnung in unzulässiger Weise. Dies ist dadurch erklärbar, dass diese Komponenten im wesentlichen in der Restglasphase der Glaskeramik verbleiben. Als Restglasbildner können höhere Gehalte auch das Kristallisationsverhalten beeinträchtigen. TiO₂ und ZrO₂ sind als Keimbildner wichtig. Die Summe der Keimbildner TiO₂+ZrO₂ soll 3,0 bis 6,0 Gew.-% betragen. Mindestgehalte von 3,0 Gew.-% sind erforderlich, um die für eine hohe Lichttransmission und Infrarottransmission erforderliche hohe Keimdichte und damit geringe Kristallitgrößen zu erreichen. Die geringen Kristallitgrößen sind auch für das Erreichen einer geringen Oberflächenrauhigkeit der Glaskeramik ohne Polieren von Ra < 50 nm, bevorzugt < 20 nm erforderlich. Der Gehalt der Keimbildner sollte 6,0 Gew.-% nicht übersteigen, weil sonst die Entglasungsstabilität der Glassschmelze bei der Formgebung durch Pressen verschlechtert wird. Die Zusammensetzung kann bis zu 0,6 Gew.-% F als Ersatz für O enthalten. Der Fluorzusatz hat sich für die Absenkung der Viskosität der Glasschmelze bewährt und kann auch die Festigkeit der Glaskeramik erhöhen, jedoch führen bereits Gehalte von 0,6 Gew.-% zu einer verschlechterten Temperatur/Zeit-Belastbarkeit (Compaction). Auch kann es durch Veränderungen an der Glaskeramikoberfläche zu Abplatzungen kommen.

Die Glasschmelzen werden mit den, für dieses Glassystem üblichen Läutermittel wie As₂O₃, Sb₂O₃, SnO₂, CeO₂, Sulfat- und Chloridverbindungen in den üblichen Mengen von 0,5 bis 2 Gew.-% geläutert.

Der Wassergehalt der erfindungsgemäßen Gläser liegt, abhängig von der Wahl der Gemengerohstoffe und von den Prozessbedingungen bei der Schmelze, üblicherweise zwischen 0,01 und 0,06 Mol/l.

In einer bevorzugten Ausführung wird das Glas in eine Glaskeramik mit Hochquarz-Mischkristallen als Hauptkristallphase umgewandelt. Die Glaskeramik enthält folgende Zusammensetzung in Gew.-%, bezogen auf die Gesamtzusammensetzung:

| | |
|---|---|
| Li₂O | 3,0-5,0 |
| Na₂O | 0-2,0 |
| K₂O | 0-1,5 |
| Σ Na₂O+K₂O | 0,5-2,5 |
| MgO+ZnO | < 0,30 |
| SrO | 0-2,0 |
| BaO | 0-3,5 |
| Σ SrO+BaO | < 4,0 |
| B₂O₃ | 0-4,0 |
| Al₂O₃ | 19,0-27,0 |
| SiO₂ | 55,0-66,0 |
| TiO₂ | 1,0-5,5 |
| ZrO₂ | 0-2,5 |
| Σ TiO₂+ZrO₂ | 3,5-5,5 |
| P₂O₅ | 0-8,0 |
| Σ B₂O₃+ P₂O₅ | 1,0-8,0 |
| Fe₂O₃ | < 130 ppm |
| F | 0-0,3 als Ersatz für O |

sowie gegebenenfalls mindestens ein Läutermittel, wie As₂O₃, Sb₂O₃, SnO₂, CeO₂, Sulfat- und Chlorid-Verbindungen.

Die Glaskeramik zeichnet sich durch eine besonders niedrige thermische Ausdehnung von < 0,5 · 10⁻⁶/K im Temperaturbereich von 20 °C bis 300 °C und eine sehr hohe Transmission im nahen Infrarot für 4 mm Dicke bei 1050 nm von > 87%, bevorzugt > 89%, aus. Der Fe₂O₃-Gehalt soll dabei durch Wahl eisenarmer Gemengerohstoffe unter 130 ppm abgesenkt werden. Die Alkaligehalte, Erdalkalien, Fluor sowie die Summe der Keimbildner TiO₂+ZrO₂ sind begrenzt. Die Zusammensetzung soll in der Summe B₂O₃+P₂O₅ 1-8 Gew.-% enthalten. Durch diese Bedingungen wird die Kristallisation zu einer Glaskeramik, die Hochquarz-Mischkristalle mit niedrigen Kristallitgrößen enthält und die über die gewünschten Eigenschaften verfügt, erreicht.

Um ein bevorzugtes Ziel der Erfindung zu erreichen, eine Glaskeramik bereitzustellen, die durch Wahl der Herstellbedingungen entweder fast ausschließlich Hochquarz-Mischkristalle als Kristallphase enthält oder fast ausschließlich Keatit-Mischkristallen enthält, sollen die Kristallisationstemperatur der Hochquarz-Mischkristallphase und die Umwandlungstemperatur in die Keatit-Mischkristalle mindestens 40 °C, bevorzugt mehr als 80°C auseinanderliegen. Dieses Ziel wird durch eine Reduzierung, insbesondere bei den Restglasbildnern, den Alkalien, Erdalkalien, B₂O₃ erreicht. Auch soll die Zusammensetzung frei sein von Fluor-Zusätzen. Gemäß dieser bevorzugten Ausführung enthält die Glaskeramik eine Zusammensetzung in Gew.-%, bezogen auf die Gesamtzusammensetzung:

| | |
|---|---|
| Li₂O | 3,0-5,0 |
| Na₂O | 0-2,0 |
| K₂O | 0-1,5 |
| Σ Na₂O+K₂O | 0,5-2,0 |
| MgO+ZnO | <0,30 |
| SrO | 0-2,0 |
| BaO | 0-3,5 |
| Σ SrO+BaO | < 3,0 |
| B₂O₃ | 0-3,0 |
| Al₂O₃ | 21,0-27,0 |
| SiO₂ | 55,0-66,0 |
| TiO₂ | 1,5-5,5 |
| ZrO₂ | 0-2,5 |
| Σ TiO₂+ZrO₂ | 3,5-5,0 |
| P₂O₅ | 0-8,0 |
| Σ B₂O₃+ P₂O₅ | 1,0-8,0 |
| Fe₂O₃ | < 200 ppm |
| technisch frei von F | |

sowie gegebenenfalls mindestens ein Läutermittel, wie As₂O₃, Sb₂O₃, SnO₂, CeO₂, Sulfat- und Chlorid-Verbindungen.

Eine für die Formgebung durch Pressen besonders vorteilhafte Glaskeramik besitzt eine niedrige Verarbeitungstemperatur V_{A} < 1270 °C und eine obere Entglasungstemperatur, die nahe bei oder sogar unterhalb der Verarbeitungstemperatur V_{A} liegt. Hinsichtlich Entglasung kritische Kristallphasen sind vor allem Mullit (Aluminiumsilikat), Baddeleyit (ZrO₂). Für ein derart verbessertes Entglasungsverhalten ist es erforderlich, die Bestandteile dieser kritischen Kristallphase insbesondere Al₂O₃, SiO₂, ZrO₂ zu begrenzen, während sich eine Erhöhung der Alkalien Na₂O, K₂O sowie Erdalkalien SrO, BaO positiv auf das Entglasungsverhalten auswirkt. Der P₂O₅-Gehalt soll mindestens 1 Gew.-% betragen, da P₂O₅ der Entglasung von Mullit entgegenwirkt. Die Zusammensetzung ist frei von Fluor-Zusätzen. Die bevorzugte Glaskeramik mit diesen Eigenschaften enthält eine Zusammensetzung in Gew.-% bezogen auf die Gesamtzusammensetzung von:

| | |
|---|---|
| Li₂O | 3,5-5,0 |
| Na₂O | 0-2,0 |
| K₂O | 0-1,5 |
| Σ Na₂O+K₂O | 0,5-2,5 |
| MgO+ZnO | < 0,30 |
| SrO | 0-2,0 |
| BaO | 0-3,5 |
| Σ SrO+BaO | 1,0-4,0 |
| B₂O₃ | 0-4,0 |
| Al₂O₃ | 20-25 |
| SiO₂ | 55-63 |
| TiO₂ | 1,5-5,5 |
| ZrO₂ | 0-2,0 |
| Σ TiO₂+ZrO₂ | 3,5-5,0 |
| P₂O₅ | 1,0-8,0 |
| Σ B₂O₃+P₂O₅ | 2,0-8,0 |
| Fe₂O₃ | < 200 ppm |
| technisch frei von F | |

sowie gegebenenfalls mindestens ein Läutermittel, wie As₂O₃, Sb₂O₃, SnO₂, CeO₂, Sulfat- und Chlorid-Verbindungen.

Für das Erreichen der geforderten niedrigen Oberflächenrauhigkeit nach Umwandeln des Glases in eine Glaskeramik ohne Polieren von Ra < 50 nm, bevorzugt < 20 nm, soll die mittlere Kristallitgröße der Glaskeramik < 300 nm, bevorzugt < 80 nm betragen. Dabei sind mit einer Hochquarz-Mischkristall enthaltenden Glaskeramik in der Regel niedrigere Kristallitgrößen zu erreichen, da bei der Umwandlung in Keatit-Mischkristalle eine Vergröberung des Gefüges stattfindet. Wenn die Kristallite direkt an der Oberfläche des Trägermaterials sitzen, beeinflussen sie die Oberflächenrauhigkeit maßgeblich.

Durch die erfindungsgemäße Zusammensetzung mit den Alkalioxiden Na₂O, K₂O wird erreicht, dass sich eine mit diesen Komponenten angereicherte glasige Oberflächenschicht beim Keramisieren ausbildet, die bis zu 1,5 µm Dicke besitzt. Auch Zusätze der Erdalkalioxiden SrO, BaO sowie B₂O₃ unterstützen die Ausbildung der glasigen Oberflächenschicht. Höhere Dicken sind wegen der Gefahr von Oberflächenrissen, hervorgerufen durch Unterschiede in der thermischen Ausdehnung, zu vermeiden. Durch die glasige Oberflächenschicht wird erreicht, dass die Zunahme der Oberflächenrauhigkeit in der Glaskeramik gegenüber dem Ausgangsglas weniger als 10 nm und in der Regel weniger als 5 nm beträgt. Die Oberflächenrauhigkeit des Trägermaterials wird dann maßgeblich durch die beim Pressen verfahrenstechnisch bedingte Oberflächenrauhigkeit bestimmt.

In einigen Anwendungsfällen ist es gewünscht, die Glaskeramik im sichtbaren Bereich einzufärben. Die Vorteile einer hohen Transmission im nahen Infrarot von 900 bis 1800 nm für die Verwendung als Kaltlichtreflektor sollen beibehalten werden. Auch soll die gute Lichttransmission für eine sichere Qualitätsbeurteilung des gepressten glasigen Formkörpers beibehalten werden. Für die Kombination einer guten Lichttransmission im glasigen Zustand, einer Einfärbung der Glaskeramik im sichtbaren Bereich und hoher Transmission der Glaskeramik im nahen Infrarot, hat sich insbesondere das Farboxid V₂O₅ bei Gehalten von 0,1 bis 0,5 Gew.-% bewährt. Der Zusatz von V₂O₅ führt im Glas zu einer leichten grünen Einfärbung, beim Keramisieren findet eine starke Einfärbung statt, während im nahen IR nur wenig absorbiert wird.

Die maximale Temperaturbelastbarkeit der Glaskeramik wird durch die Compaction bestimmt. Compaction bedeutet, dass die thermisch hoch belasteten Bereiche des glaskeramischen Trägermaterials stärker als thermisch weniger belastete Bereiche kontrahieren. Dieser Effekt tritt durch Gefügeänderungen abhängig von der Temperatur/Zeitbelastung der Glaskeramik auf. Die unterschiedliche Temperatur/Zeitbelastung und damit einhergehende Compaction macht sich insbesondere bei größeren Artikeln bemerkbar. Eine hohe Compaction führt zu unzulässig hohen Compactionspannungen zwischen den thermisch hoch und weniger belasteten Bereichen des Artikels. Im Extremfall kann dies bei längerem Einsatz bei hohen Temperaturen zum Bruch führen. Die Compaction bezogen auf 100 mm Probenlänge soll nach Temperung bei 600 °C, 200 h weniger als 60 µm betragen, womit selbst Anwendungen mit höchster thermischer Belastung genüge getan wird.

Für die Verwendung als Kaltlichtreflektor ist es vorteilhaft, wenn die IR-Transmission außer für die Wellenlänge von 1050 nm, über den gesamten Bereich von 900 bis 1800 nm, Werte von > 85%, bevorzugt > 87% bei 4 mm Dicke, besitzt. Mit diesem breiten Wellenlängenbereich wird den Strahlungsmaxima der meisten lichtstarken Lampentypen und ihrer spektralen Verteilung entsprochen. Dies macht das glaskeramische Trägermaterial vielseitig einsetzbar.

Für Anwendungen, bei denen die Anforderungen an die Temperaturgradientenfestigkeit und die Temperaturbelastbarkeit nicht so extrem sind, ist es wirtschaftlich vorteilhaft, das Trägermaterial in der glasigen Form zu belassen, um den Prozessschritt des Keramisierens einzusparen. Um den Anforderungen zu genügen, sollte das Glas über eine thermische Ausdehnung im Temperaturbereich zwischen Raumtemperatur und 300 °C von < 5 · 10⁻⁶/K, bevorzugt < 4,5 · 10⁻⁶/K und eine Transformationstemperatur Tg von größer als 600 °C verfügen. Die IR-Transmission soll die von der Glaskeramik bekannten hohen Werte von > 85 %, bevorzugt > 87 % bei 4 mm Dicke im Wellenlängenbereich von 900 nm bis 1800 nm besitzen.

Um eine sichere Qualitätskontrolle der gepressten Formkörper zu ermöglichen, soll die Lichttransmission des Glases mindestens 85% bei 4 mm Dicke betragen. Diese hohe Lichttransmission ermöglicht es Formkörper mit Defekten, die sicherheitsrelevant sind oder die die spezifizierten Produkteigenschaften, wie die gute Lichtausbeute gefährden können, auszusortieren. Dies ist wirtschaftlich vorteilhaft, weil die nachfolgenden Prozessschritte bis zum bespiegelten Trägermaterial und die Endkontrolle zusätzliche Kosten verursachen. Die Lichttransmission der Glaskeramik soll wenigstens 50 %, bevorzugt mehr als 85 %, gemessen bei 4 mm Dicke betragen, um Fehler, die beim Keramisieren auftreten zu identifizieren und um den Artikel vor weiteren Prozessschritten aussortieren zu können. Für die hohe Lichttransmission müssen Absorptionsund Streuungseffekte vermindert werden. Die Absorption wird im wesentlichen durch die geringen Eisengehalte bei abgesenkten TiO₂-, MgO- und ZnO-Gehalten vermindert. Für die Reduzierung der Lichtstreuung ist es erforderlich, die Kristallitgrößen auf Werte deutlich unter die Wellenlänge des sichtbaren Lichts abzusenken, sowie die Unterschiede im Brechungsindex zwischen Kristallphase und Restglasphase gering zu halten.

In einer bevorzugten Ausführungsform hat das glasige oder glaskeramische Trägermaterial die Form eines Reflektors, dessen Innenkontur an eine oder mehrere Parabeln angenähert ist. Wenn die Lichtquelle als im wesentlichen punktförmige Quelle im Brennpunkt der Parabel angeordnet ist, wird man die Innenkontur als Parabel ausführen, um eine parallele Ausrichtung des reflektierten Lichtes zu erreichen. Bei einer Lichtquelle, die bauartbedingt eine lineare Ausdehnung besitzt, ist es technisch oft vorteilhaft, die Innenkontur an eine oder mehrere Parabeln anzunähern.

Für die Herstellung des Kaltlichtreflektors wird das glasige oder glaskeramische Trägermaterial mit einer IR-durchlässigen Spiegelschicht beschichtet. Hierfür eignen sich Metalle wie Aluminium weniger, da sie im nahen IR reflektieren. Durch Schichtfolgen aus verschiedenen Oxidschichten, die bezüglich der Anzahl, Abfolge und Dicken der Schichten sowie Brechungsindizes der Schichten optimiert sind, kann erreicht werden, dass diese Schichtfolgen im sichtbaren Licht gut reflektieren und im Infraroten für die Wärmestrahlung der Lichtquelle durchlässig sind. Bevorzugt werden Schichtfolgen aus Oxiden, wie SiO₂ und TiO₂ eingesetzt. Als Beschichtungsverfahren können Vakuumverdampfung, Sputtern und bevorzugt PICVD-Beschichtung eingesetzt werden.

Bei dem erfindungsgemäßen Verfahren zur Herstellung eines glasigen, in eine Glaskeramik mit Hochquarz- und/oder Keatit-Mischkristallen umwandelbaren Trägermaterials für Beschichtung mit einer Spiegelschicht erfolgt die Formgebung über einen Speiser, in dem ein Tropfen definierten Gewichtes in eine Pressform gegeben wird. Über einen Stempel mit geglätteter Oberfläche wird die geforderte parabolische Kontur des Trägermaterials gepresst. Die glasigen Trägermaterialien werden anschließend aus der Pressform entnommen und in einem Kühlofen thermisch entspannt. Anschließend findet die Qualitätskontrolle zur Aussortierung von fehlerhaften Formkörpern statt.

Das erfindungsgemäße Glas erlaubt eine Verwendung sowohl als glasiges Trägermaterial für die Beschichtung, als auch, nach Umwandlung in eine Glaskeramik mit Hochquarz-Mischkristallen oder Keatit-Mischkristallen als Hauptkristallphase, als glaskeramisches Trägermaterial mit hoher Temperaturgradientenfestigkeit und hoher Temperaturbelastbarkeit.

Bei dem Verfahren zur Umwandlung des gepressten glasigen Trägermaterials in die Glaskeramik mit Hochquarz-Mischkristall als Hauptkristallphase wird das Glas bei Temperaturen von 630 °C bis 750 °C von der Dauer von > 15 Minuten gekeimt, um hohe Keimdichten zu erzeugen und anschließend wird die Kristallisation bei Temperaturen von 700 °C bis 850 °C, für eine Dauer von mindestens 30 Minuten, durchgeführt. Aufgrund dieses Verfahrens beträgt die mittlere Kristallitgröße der Glaskeramik weniger als 80 nm und die thermische Ausdehnung im Temperaturbereich zwischen 20 °C und 300 °C weniger als 0,5 · 10⁻⁶/K.

Für die Umwandlung des gepressten glasigen Trägermaterials in eine Glaskeramik mit Keatit-Mischkristall als Hauptkristallphase, findet die Umwandlung bei Temperaturen von 780 °C bis 1000 °C statt und die mittlere Kristallitgröße beträgt hier weniger als 300 nm und die thermische Ausdehnung im Temperaturbereich zwischen 20°C und 300 °C beträgt weniger als 1,2 · 10⁻⁶/K. Glaskeramische Trägermaterialien mit Keatit-Mischkristallen als Hauptkristallphase verfügen gegenüber solchen mit Hochquarz-Mischkristallen als Hauptkristallphase über höhere thermische Ausdehnung und damit verminderte Temperaturgradientenfestigkeit. Auch die Lichttransmission liegt, bedingt durch die größeren mittleren Kristallitgrößen, bei niedrigeren Werten, es ist ein leicht transluzentes, durch Streuung an den Kristalliten bedingtes, Aussehen feststellbar. Glaskeramische Trägermaterialien mit Keatit-Mischkristallen als Hauptkristallphase haben in der Regel verbesserte Temperatur/Zeit-Belastbarkeit (Compaction). Sie können daher bei Anwendungen mit höheren Einsatztemperaturen Vorteile bieten.

Es ist wirtschaftlich vorteilhaft, wenn aus der gleichen Zusammensetzung glasige Trägermaterialien und Glaskeramiken mit Hochquarz und Keatit als Hauptkristallphase hergestellt werden können, da sie über unterschiedliche Eigenschaftsprofile und Herstellungskosten verfügen.

Vorzugsweise findet die erfindungsgemäße Glaskeramik und/oder das Ausgangsglas als Reflektor Verwendung, insbesondere Kaltlichtreflektor, Trägermaterial für eine Spiegelschicht, Vorsatzscheibe in der Lichttechnik, insbesondere dort, wo durch hohe Lichtleistung eine hohe Strahlungswärme verbunden mit Temperaturunterschieden toleriert werden muss. Während das glasige Trägermaterial wirtschaftlich günstige Lösungen mit verringerten Anforderungen an Temperaturbelastbarkeit und Temperaturgradientenfestigkeit erfüllt, genügen die Glaskeramiken höchsten Anforderungen bezüglich dieser Eigenschaften. Diese Trägermaterialien verfügen über eine sehr hohe Infrarottransmission und erlauben damit die Verwendung als Kaltlichtreflektoren.

Die vorliegende Erfindung wird anhand von Beispielen und einer Zeichnung weiter verdeutlicht.

Die Ausgangsgläser wurden unter Verwendung von in der Glasindustrie üblichen Rohstoffen bei Temperaturen von 1620 °C erschmolzen und geläutert. Nach dem Schmelzen in Tiegeln aus gesintertem Kieselglas wurden die Schmelzen in Platintiegel umgegossen und bei Temperaturen von 1580 °C über 30 min durch Rühren homogenisiert. Nach Abstehen von 2 h bei 1640 °C, wurden Gussstücke von 140x100x30 mm Größe gegossen und in einem Kühlofen beginnend ab 650 °C auf Raumtemperatur abgekühlt, um thermische bedingte Spannungen abzubauen. Aus diesen Gussstücken wurden die Prüfmuster, wie Stäbe für die Messung des thermischen Ausdehnungskoeffizienten und Plättchen für die Messung der Transmission, herauspräpariert. Die glasigen Muster, in den für Untersuchungen an Glaskeramiken benötigten Größen, wurden anschließend mit den aufgeführten Keimbildungs- und Kristallisationsbedingungen in die Glaskeramik umgewandelt.

Tabelle 1 zeigt Zusammensetzungen von erfindungsgemäßen Gläsern. Beispiele 7, 8 und 9 sind Vergleichsbeispiele und zeigen die Vorteile der Erfindung gegenüber dem Stand der Technik.

Die durch eingesetzte Rohstoffe bedingten Eisengehalte sind in ppm angegeben. Der H₂O-Gehalt wurde über Infrarotmessungen bestimmt und ist in Mol/l angegeben.

An den erschmolzenen Gläsern wurden die Transformationstemperatur Tg, die Verarbeitungstemperatur V_{A}, die thermische Ausdehnung im Temperaturbereich zwischen 20 °C und 300 °C, die Dichte, der Lichttransmissionsgrad τ im Bereich des sichtbaren Lichtes nach EN 410 und die Infrarottransmission bei 4 mm Dicke bei den Wellenlängen 1050 und 1800 nm bestimmt.

Für die Messung des Entglasungsverhaltens wurden die Gläser im Platintiegel aufgeschmolzen. Anschließend wurden die Platintiegel für 5 h bei verschiedenen Temperaturen im Bereich der Verarbeitungstemperatur gehalten. Die höchste Temperatur, bei der die ersten Kristalle im Kontakt der Glasschmelze mit dem Platintiegel auftraten, bestimmt die obere Entglasungstemperatur (OEG = obere Entglasungsgrenze). Die bei der Entglasung auftretende kritische Kristallphase ist in der Tabelle aufgeführt.

DTA-Messungen liefern die Kristallisationstemperatur des Glases für den Übergang in die Hochquarz-Mischkristall enthaltende Glaskeramik und für die Umwandlungstemperatur in die Keatit-Mischkristall enthaltende Glaskeramik. Dabei wurde eine einheitliche konstante Heizrate von 5 K/min verwendet. In der Tabelle sind die Temperaturen für die Kristallisation der Hochquarz-Mischkristall-Glaskeramik und die Umwandlung in die Keatit-Mischkristall enthaltende Glaskeramik aufgeführt.

Wie aus Tabelle 1 ersichtlich, wurden mit den erfindungsgemäßen Gläsern Nr. 1 bis 6 die Anforderungen an das Glas, für die Formgebung durch Pressen und die Verwendung als Trägermaterial für die Beschichtung mit einer Spiegelschicht in glasiger Form, erfüllt.

Die Verarbeitungstemperatur V_{A} lag unterhalb 1300 °C und zum Teil sogar unterhalb 1270 °C. Die obere Entglasungstemperatur OEG lag höchstens 50 °C oberhalb der Verarbeitungstemperatur V_{A} der Gläser, zum Teil sogar darunter.

Die thermische Ausdehnung des Glases im Temperaturbereich zwischen Raumtemperatur und 300 °C betrug weniger als 5 · 10⁻⁶/K. Die Transformationstemperatur Tg lag oberhalb 600 °C. Die insbesonders für die Qualitätsbegutachtung wichtige Lichttransmission der Gläser lag oberhalb 85% für 4 mm Dicke.

Für die Verwendung als Spiegelträgermaterial in glasiger Form besitzen die Gläser eine hohe IR-Transmission bei 1050 nm und 4 mm Dicke von > 85%. Diese guten Transmissionswerte wurden auch im Wellenlängenbereich von 900 bis 1800 nm erreicht.

Die DTA-Peaktemperaturen für die Kristallisation des Hochquarz-Mischkristalls und die Umwandlung in den Keatit-Mischkristall lagen mindestens 40 °C auseinander.

Die Vergleichsbeispiele 8 und 9 besitzen aufgrund ihrer Zusammensetzungen eine sehr niedrige Viskosität. Die Transformationstemperaturen Tg sind niedrig.
Bei Vergleichsbeispiel 8 entspricht die Entglasungsstabilität nicht den Anforderungen.

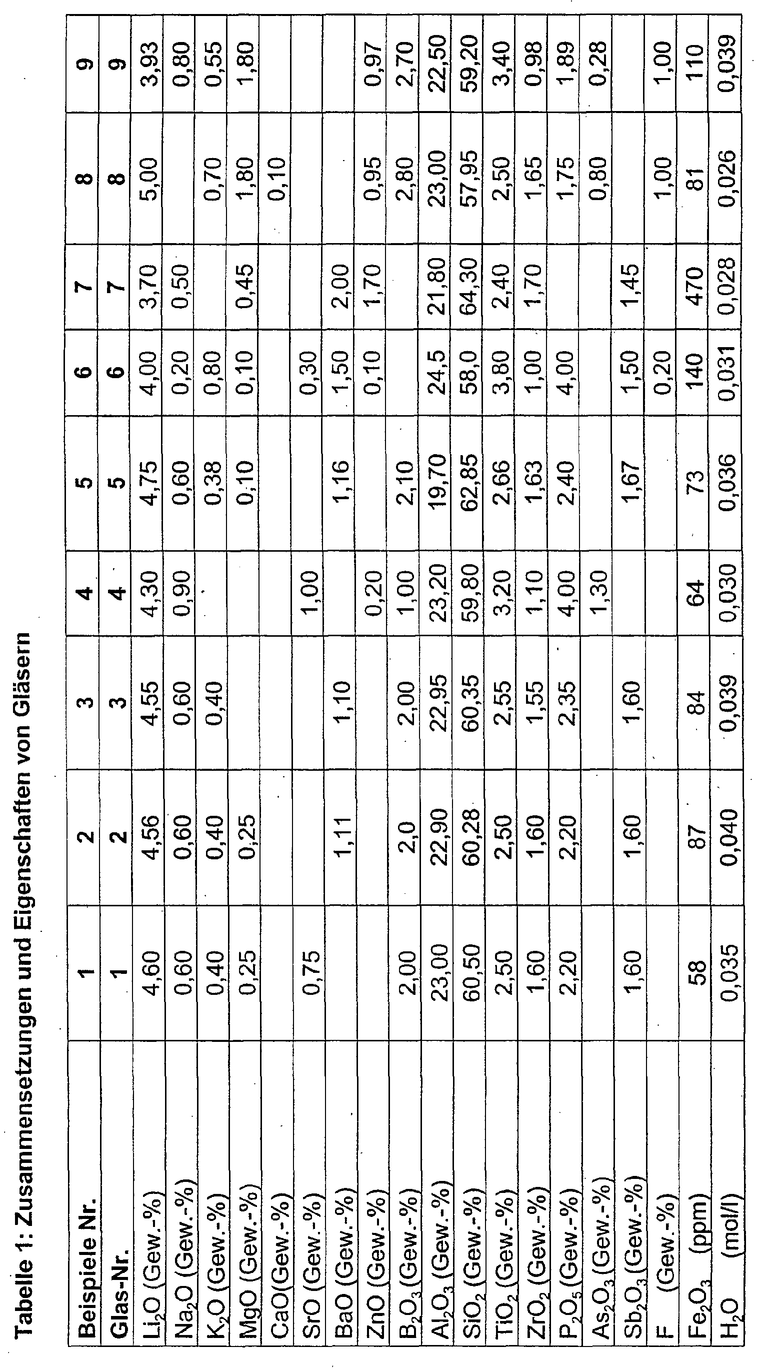

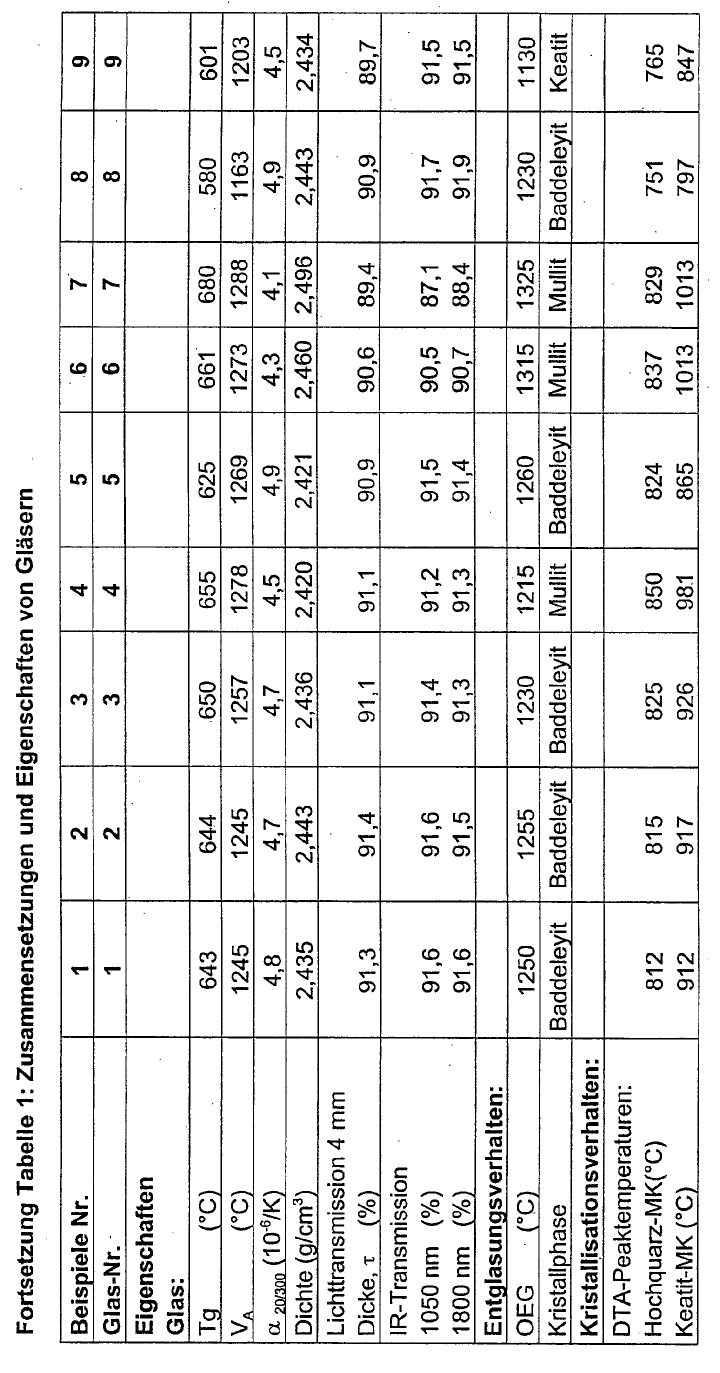

In Tabelle 2 sind die Ausgangsgläser für die Keramisierung gemäß der Glas-Nr. von Tabelle 1 aufgeführt. Bei den Beispielen 17 und 18 handelt es sich um Vergleichsglaskeramiken.

Die Keramisierung, dass heißt die Überführung der Gläser in die Glaskeramiken erfolgte bei den in Tabelle 2 aufgeführten Keimbildungs- und Kristallisationsbedingungen. Die Gläser wurden mit 5 K/min von Raumtemperatur auf 500 °C aufgeheizt. Das Aufheizen auf die angegebenen Keimbildungstemperaturen erfolgte mit 4 K/min. Keimbildungstemperaturen und die Dauer der Keimbildung sind in Tabelle 2 angegeben. Die Erhöhung von der Keimbildungstemperatur auf die Kristallisationstemperatur wurde mit einer Heizrate von 1,5 K/min durchgeführt, Bei der angegebenen Kristallisationstemperatur und der aufgeführten Dauer wurden die Gläser kristallisiert. Die Abkühlung erfolgte bis 500 °C mit einer Abkühlrate von ca. 4K/min, anschließend durch Abschalten der Ofenheizung.

Beispiele 12 und 15 zeigen Glaskeramiken, die in weiß/transluzente Glaskeramiken mit Keatit-Mischkristallen. als Hauptkristallphase umgewandelt wurden. Die restlichen erfindungsgemäßen Beispiele verfügen über Hochquarz-Mischkristalle als vorherrschende Kristallphase.

Die Kristallphasenanteile und die mittleren Kristallitgröße der Hauptkristallphase wurden mittels Röntgenbeugungsdiffraktometrie bestimmt.

Die erfindungsgemäßen Beispiele verfügen über die gewünschten niedrigen Werte für die thermische Ausdehnung gemessen im Temperaturbereich zwischen 20 °C und 300 °C.

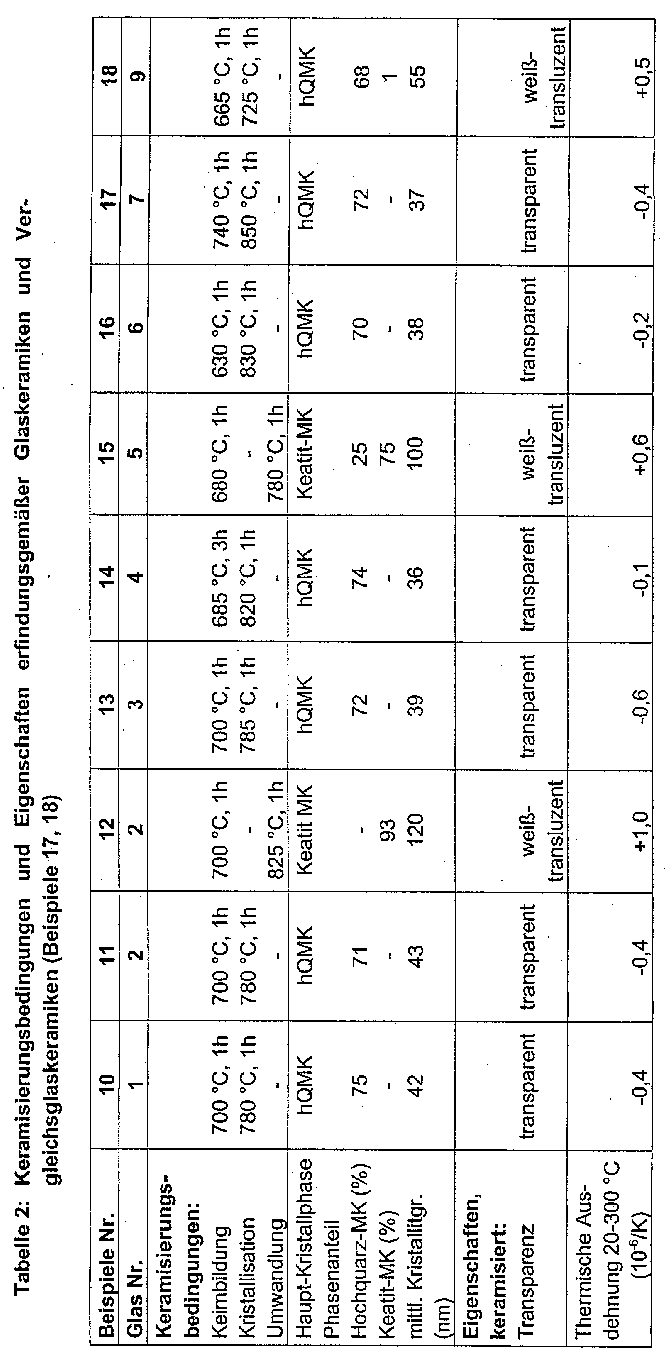

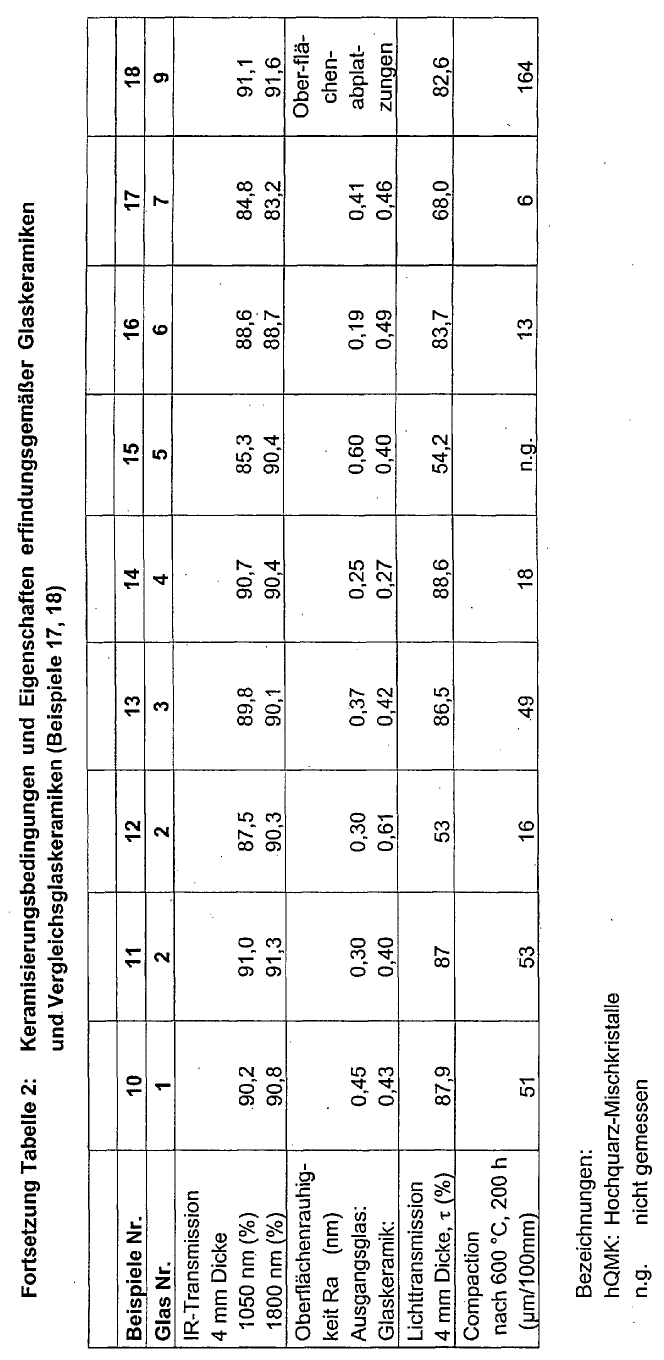

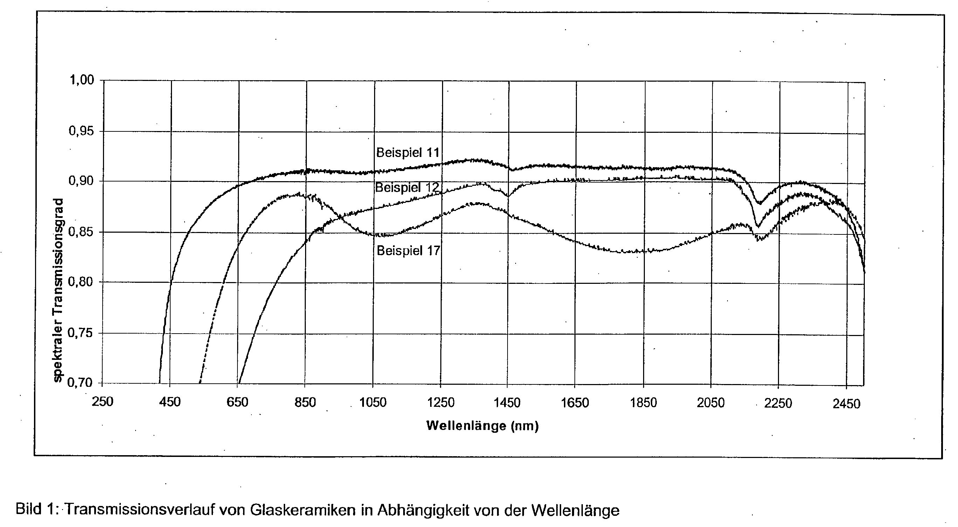

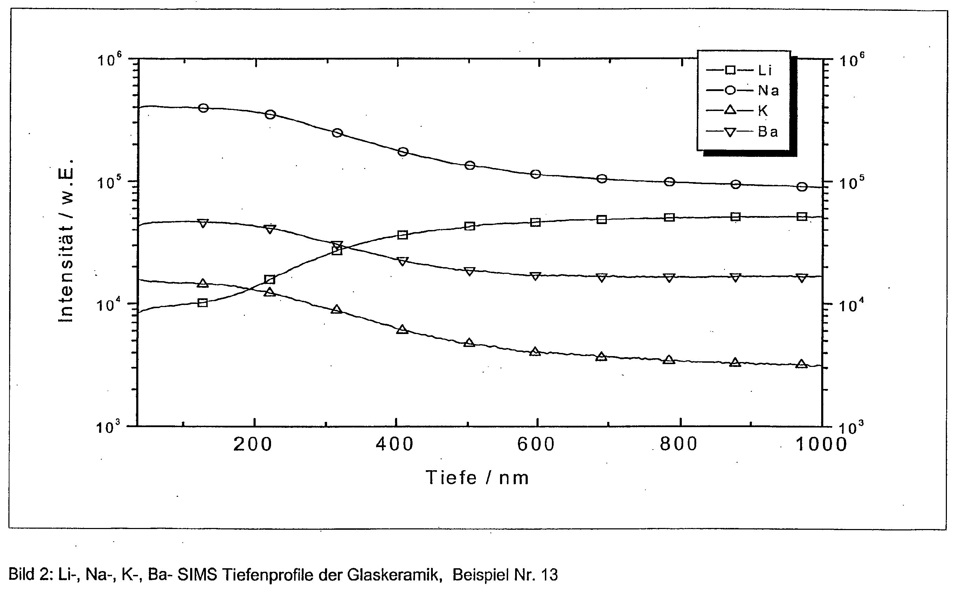

Die Zeichnung besteht aus Figur 1 und Figur 2. Figur 1 zeigt den Tranmissionsverlauf von Glaskeramiken in Abhängigkeit von der Wellenlänge.

Die Figur 1 zeigt den Transmissionsverlauf für das Glas-Nr. 2, und die daraus hergestellten Glaskeramiken mit Hochquarz- bzw. Keatit-Mischkristallen als Hauptkristallphase (Beispiel 11 und 12). Zwischen 900 und 1800 nm werden hohe Transmissionswerte erreicht. Demgegenüber zeigt die Vergleichsglaskeramik Beispiel Nr. 17, im keramisierten Zustand breite Absorptionsbanden bei ca. 1050 nm und 1800 nm, die auf die hohen Eisengehalte zurückgeführt werden. Mit den erfindungsgemäßen Beispielen wird die geforderte hohe IR-Transmission erreicht. Die Lichttransmission der erfindungsgemäßen Glaskeramiken verfügt über die für die Qualitätsinspektion wichtigen hohen Werte.

Figur 2 zeigt Li-, Na-, K- und Ba-SIMS Tiefenprofile der erfindungsgemäßen Glaskeramik.

Für die Messung der Oberflächenrauhigkeit der Glaskeramik werden aus einem Gussstück mit feuerpolierter Oberfläche, wie sie beim Gießens des Glases entstanden ist, mehrere etwa gleich große Proben von 2x2 cm² Oberfläche und ca. 0,5 cm Dicke herauspräpariert. Eine der Proben verbleibt zu Vergleichszwecken glasig, andere werden mit den angegebenen Keramisierungsbedingungen in die Glaskeramik überführt. Bei den Proben wird die Oberflächenrauhigkeit Ra mit einem Rasterkraftmikroskop (AFM) in einem quadratischen Messbereich von 50µm Seitenlänge gemessen. Es wird eine feuerpolierte Oberfläche in der beschriebenen Weise für die Messung verwendet, weil dabei die Oberfläche nicht durch das Pressen verfahrensbedingt beeinflusst wird. Die niedrigen Rauhigkeitswerte werden auf das Vorhandensein einer glasigen Oberflächenschicht in den Glaskeramiken zurückgeführt. Bei der Vergleichsglaskeramik Beispiel 18 konnte die Oberflächenrauhigkeit nicht gemessen werden, weil es zu Abplatzungen der Oberflächenschicht kam.
Figur 2 zeigt das, an einem Querschliff von Beispiel 13, gemessene Tiefenprofil der Elementkonzentration von Li, Na, K und Ba. Aus dem Konzentrationsverlauf der Alkali- und Erdalkalielemente ist ersichtlich, dass sich bei diesem Beispiel die für das Erreichen guter Oberflächenrauhigkeitswerte günstige glasige Oberflächenschicht von etwa 400 nm Dicke gebildet hat. Das Li-Tiefenprofil korreliert mit der Anwesenheit der Kristalle, in die es bevorzugt eingebaut wird.

Die Compaction wird als Längenänderung eines 100 mm langen Stabes bei Temperung mit 600 °C, 200 h gemessen. Mit dieser gegenüber üblichen Einsatzbedingungen erhöhten Temperatur wird in einem Zeitraffertest die Temperatur/Zeit-Belastbarkeit der Glaskeramik nachempfunden. Es werden die geforderten niedrigen Compactionwerte erreicht, während die Vergleichsglaskeramik Beispiel 18 hohe Werte besitzt.

## Patentansprüche

1. Glaskeramik mit Hochquarz- und/oder Keatit-Mischkristallen mit einer Oberflächenrauhigkeit ohne Polieren von Ra < 50 nm, einer thermischen Ausdehnung im Temperaturbereich zwischen 20 °C und 300 °C von <1,2 · 10⁻⁶/K, einer Transmission im nahen Infrarot bei 1050 nm von > 85% bei 4 mm Dicke, und einer Zusammensetzung in Gew.-%, bezogen auf die Gesamtzusammensetzung, enthaltend:
| | |
|---|---|
| Li₂O | 3,0-5,5 |
| Na₂O | 0-2,5 |
| K₂O | 0-2,0 |
| Σ Na₂O+K₂O | 0,5-3,0 |
| Σ MgO+ZnO | < 0,3 |
| SrO | 0-2,0 |
| BaO | 0-3,5 |
| B₂O₃ | 0-4,0 |
| Al₂O₃ | 19,0-27,0 |
| SiO₂ | 55,0-66,0 |
| TiO₂ | 1,0-5,5 |
| ZrO₂ | 0-2,5 |
| Σ TiO₂+ZrO₂ | 3,0-6,0 |
| P₂O₅ | 0-8,0 |
| Fe₂O₃ | < 200 ppm |
| F | 0-0,6 |
sowie gegebenenfalls mindestens ein Läutermittel, wie As₂O₃, Sb₂O₃, SnO₂, CeO₂, Sulfat- und Chlorid-Verbindungen.

2. Glaskeramik nach Anspruch 1, mit Hochquarz-Mischkristallen als Hauptkristallphase, einer thermischen Ausdehnung im Temperaturbereich zwischen 20 °C und 300 °C von < 0,5 10⁻⁶/K, einer Transmission im nahen Infrarot bei 1050 nm von > 87%, bevorzugt > 89% bei 4 mm Dicke und einer Zusammensetzung in Gew-%, bezogen auf die Gesamtzusammensetzung, enthaltend:
| | |
|---|---|
| Li₂O | 3,0-5,0 |
| Na₂O | 0-2,0 |
| K₂O | 0-1,5 |
| Σ Na₂O+K₂O | 0,5-2,5 |
| Σ SrO+BaO | < 4,0 |
| Σ TiO₂+ZrO₂ | 3,5-5,5 |
| Σ B₂O₃+ P₂O₅ | 1,0-8,0 |
| Fe₂O₃ | < 130 ppm |
| F | 0-0,3 |
und gegebenenfalls mindestens ein Läutermittel, wie As₂O₃, Sb₂O₃, SnO₂, CeO₂, Sulfat- und Chlorid-Verbindungen.

3. Glaskeramik nach Anspruch 1 mit einer Zusammensetzung in Gew.-%, bezogen auf die Gesamtzusammensetzung, enthaltend:
| | |
|---|---|
| Li₂O | 3,0-5,0 |
| Na₂O | 0-2,0 |
| K₂O | 0-1,5 |
| Σ Na₂O+K₂O | 0,5-2,0 |
| Σ SrO+BaO | < 3,0 |
| B₂O₃ | 0-3,0 |
| Al₂O₃ | 21,0-27,0 |
| TiO₂ | 1,5-5,5 |
| Σ TiO₂+ZrO₂ | 3,5-5,0 |
| Σ B₂O₃+ P₂O₅ | 1,0-8,0 |
und gegebenenfalls mindestens ein Läutermittel, wie As₂O₃, Sb₂O₃, SnO₂, CeO₂, Sulfat- und Chlorid-Verbindungen.

4. Glaskeramik nach Anspruch 1, mit einer Zusammensetzung in Gew.-%, bezogen auf die Gesamtzusammensetzung, enthaltend:
| | |
|---|---|
| Li₂O | 3,5-5,0 |
| Na₂O | 0-2,0 |
| K₂O | 0-1,5 |
| Σ Na₂O+K₂O | 0,5-2,5 |
| Σ SrO+BaO | 1,0-4,0 |
| Al₂O₃ | 20-25 |
| SiO₂ | 55-63 |
| TiO₂ | 1,5-5,5 |
| ZrO₂ | 0-2,0 |
| Σ TiO₂+ZrO₂ | 3,5-5,0 |
| P₂O₅ | 1,0-8,0 |
| Σ B₂O₃+P₂O₅ | 2,0-8,0 |
und gegebenenfalls mindestens ein Läutermittel, wie As₂O₃, Sb₂O₃, SnO₂, CeO₂, Sulfat- und Chlorid-Verbindungen.

5. Glaskeramik nach wenigstens einem der Ansprüche 1 bis 4, wobei die mittlere Kristallitgröße < 300 nm, bevorzugt < 80 nm beträgt.

6. Glaskeramik nach wenigstens einem der Ansprüche 1 bis 5, die an der Oberfläche eine bis zu 1,5 µm dicke glasige Schicht mit erhöhten Na₂O-, K₂O- und/oder SrO-, BaO-Gehalten aufweist, und die Zunahme der Oberflächenrauhigkeit beim Keramisieren der Glaskeramik gegenüber dem Ausgangsglas weniger als 10 nm bevorzugt weniger als 5 nm beträgt.

7. Glaskeramik nach wenigstens einem der Ansprüche 1 bis 6, enthaltend zusätzlich mindestens ein im Sichtbaren absorbierendes, im nahen Infrarot nicht oder wenig absorbierendes Farboxid, vorzugsweise V₂O₅.

8. Glaskeramik nach wenigstens einem der Ansprüche 1 bis 7, die eine hohe Temperatur/Zeit-Beiastbarkeit hinsichtlich Compaction von < 60 µm/100 mm nach Temperung bei 600 °C, 200 h aufweist.

9. Glaskeramik nach wenigstens einem der Ansprüche1 1 bis 8, die eine hohe IR-Transmission von > 85% bevorzugt > 87% bei 4 mm Dicke im Wellenlängenbereich zwischen 900 nm - 1800 nm aufweist.

10. Glaskeramik nach wenigstens einem der Ansprüche 1 bis 9, die eine Lichttransmission der Glaskeramik von > 50 %, bevorzugt >85% bei 4 mm Dicke aufweist.

11. Glas mit einer Zusammensetzung nach wenigstens einem der Ansprüche 1 bis 4.

12. Glas nach Anspruch 11, das eine thermische Ausdehnung im Temperaturbereich zwischen 20 °C und 300 °C von <5 · 10⁻⁶/K, bevorzugt von < 4,5 · 10⁻⁶/K und eine Transformationstemperatur Tg > 600 °C aufweist.

13. Glas nach Anspruch 11 oder 12, das eine IR-Transmission von > 85% bevorzugt > 87% bei 4 mm Dicke im Wellenlängenbereich zwischen 900 nm - 1800 nm aufweist.

14. Glas nach Anspruch 11 oder 12, das eine Lichttransmission von > 85% bei 4 mm Dicke aufweist.

15. Reflektor mit einer an eine oder mehrere Parabeln angenäherten Innenkontur, enthaltend Glas und/oder Glaskeramik nach wenigstens einem der Ansprüche 1 bis 14.

16. Reflektor nach Anspruch 15, der eine IR-durchlässige Spiegelschicht aufweist, die bevorzugt Schichtfolgen verschiedener Oxidschichten mit unterschiedlichen Brechungsindizes, wie SiO₂/TiO₂ enthält.

17. Verfahren zur Herstellung eines glasigen in eine Glaskeramik mit Hochquarz- und/oder Keatit-Mischkristallen umwandelbaren Trägermaterials für die Beschichtung mit einer Spiegelschicht, wobei die Formgebung über einen Speiser erfolgt, in dem ein schmelzflüssiger Tropfen, definierten Gewichtes, in eine Pressform gegeben wird, und über einen Stempel mit geglätteter Oberfläche die parabolische Kontur des Trägermaterials gepresst wird.

18. Verfahren nach Anspruch 17, wobei die Umwandlung des gepressten glasigen Trägermaterials in die Hochquarzmischkristall als Hauptkristallphase enthaltende Glaskeramik bei Keimbildungstemperaturen von 630 °C bis 750 °C, einer Dauer von > 15 min und die Kristallisation bei Temperaturen von 700 °C bis 850 °C, einer Dauer > 30 min erfolgt.

19. Verfahren nach Anspruch 17, wobei das gepresste glasige Trägermaterial bei Temperaturen von 780 °C bis 1000 °C in eine Glaskeramik mit Keatit-Mischkristall als Hauptkristallphase umgewandelt wird.

20. Verwendung eines Glases oder einer Glaskeramik nach wenigstens einem der Ansprüche 1 bis 19 als Trägermaterial für die Beschichtung wo durch hohe Lichtleistung eine hohe Strahlungswärme verbunden mit Temperaturunterschieden toleriert werden muss.

21. Verwendung nach Anspruch 20, als Reflektor, insbesondere Kaltlichtreflektor, Trägermaterial für eine Spiegelschicht und Vorsatzscheibe in der Lichttechnik
